# EUROPEAN PATENT APPLICATION

(11) **EP 2 275 221 A2**
(43) Date of publication of application: **19.01.2011**
(21) Application number: 10075268.2
(22) Date of filing: 23.06.2010
(51) Int. Cl.: B23K 9/28, B23K 9/32

(54) **Welding device**

(30) Priority: 30.06.2009 NL 1037086
(71) Applicant: Van de Ven, Hans, 5261 ES Vught (NL)
(72) Inventor: Van de Ven, Hans, 5261 ES Vught (NL)
(74) Representative: Reynvaan, Lambertus Johannes

(57) **Abstract**

Welding device consisting of a housing (1) to which a welding torch (3) is connected via a supply line (2). The housing comprises cooling means (4, 5, 6) which are formed by a compressor (4) which draws in outside air and is connected to a pressure line (5, 5a, 5b) which passes this air via a cooling unit (6) via the supply line (2) to the welding torch (3) and returns the air from the welding torch through the line (5b) via the supply line to a discharge means (7) which is arranged outside the supply line at some distance from the welding torch. The welding torch being provided with means (16) to assist the heat transfer from the welding torch to the cooling air. The cooling unit comprises a metal block (8) in which a duct (5) is provided and the opposite large lateral surfaces of said block are covered with Peltier elements, in such way that the cooling surface of each Peltier elements adjoins the metal block while the warm side of each Peltier element is covered with plates (10) comprising cooling ribs.

## Description

The present invention relates to a welding device consisting of a housing to which a welding torch is connected via a supply line, which housing comprises cooling means which pass a cooling medium to the welding torch via the supply line.

A welding device of this type is known, for example, from Netherlands patent 1027088 in the name of the Applicant. With this known welding device, the welding torch is cooled by means of recirculating cooling water. To this end, a circuit for cooling water is present, which circuit comprises a heat exchanger, a pump and a storage vessel for water, which are accommodated in the housing. In this case, the water is taken to the welding torch via the supply line and returned to the housing from the welding torch via the supply line.

In practice, it has been found that the cooling system is the most common source of malfunctions with the known welding device. This is mainly due to leaks occurring, and through contamination of the cooling water, which can cause the pump to get stuck. There is also a risk that the cooling water could freeze.

It is thus an object of the present invention to provide a welding device in which the abovementioned drawbacks are prevented in an efficient manner and which is thus less susceptible to failure.

According to the invention, this object is achieved by the fact that the cooling means are formed by a compressor which draws in outside air and is connected to a pressure line which passes this air through the supply line via a cooling unit to the welding torch in order to cool the latter, and returns the air from the welding torch via the supply line to a discharge means which is arranged outside the supply line at some distance from the welding torch, the welding torch being provided with means to assist the heat transfer from the torch to the cooling air.

This results in an open cooling system in which the outside air is used as cooling medium. This has the important advantage that possible leaks have no adverse effect on the welding process.

The invention is explained in more detail with reference to the attached drawing, in which:
- Fig. 1: diagrammatically shows the welding device according to the invention;
- Fig. 2: shows a top view of the cooling unit according to the invention;
- Fig. 3: shows a side view of the cooling unit from Fig. 2, in which the panel which is provided with cooling ribs has been omitted;
- Fig. 4: shows a diagrammatic view of the cooling jacket of the welding torch; and
- Fig. 5: shows a cross section of the supply line of the welding device according to the invention.
- Fig. 6: shows a diagrammatic view of a further development of the invention

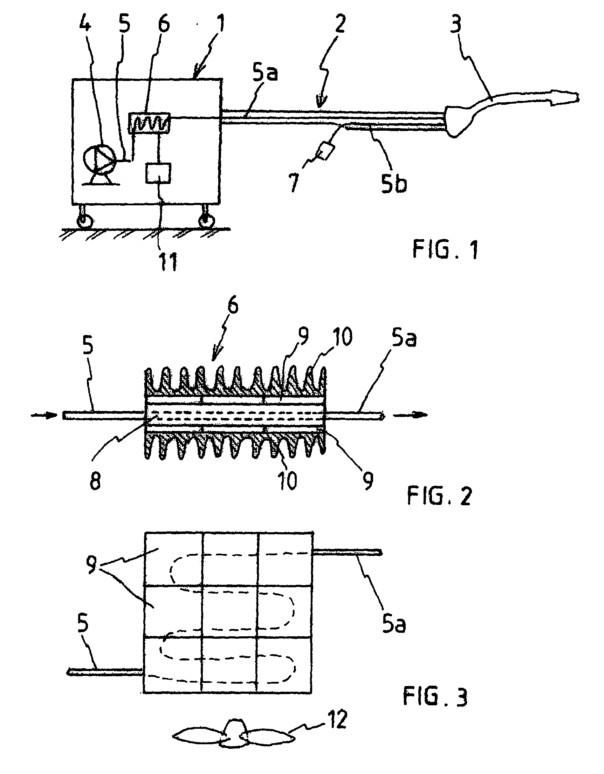

Fig. 1 diagrammatically shows a welding device according to the invention which consists of a housing 1, to which a welding torch 3 is connected via a supply line 2. The housing 1 is provided in the customary manner with a stock roll of welding wire (not shown) and a gas supply (not shown either), with the welding wire and the gas being passed to the welding torch via the supply line. The housing 1 also contains cooling means for cooling the welding torch 3. These cooling means are formed by a compressor 4 which is accommodated in the housing 1 and draws in outside air, and which cooled air is then passed through a cooling unit 6 via a pressure line 5. The pressure line 5a runs from the cooling unit via the supply line to the welding torch 3 in order to cool the latter. From the welding torch, the pressure line 5b returns via the supply line 2 and ends at some distance from the welding torch outside the supply line at a discharge means, like a throttle member 7, in order to maintain the pressure in the pressure line.

The cooling unit according to the invention is described with reference to Figs. 2 and 3. As can be seen in these figures, the cooling unit consists of a central block 8 made of aluminium or another suitable metal, in which a zigzag-shaped duct is provided which is indicated by dashed lines in Fig. 3. The pressure line 5 coming from the compressor is connected to one side of this duct, while the pressure line 5a running to the welding torch 3 is connected to the other side thereof. The opposite large lateral surfaces of the block 8 are covered by thermoelectric elements 9, also referred to as Peltier elements.

Such a Peltier element which is in the form of a flat rectangular panel, has the property that when a direct current is applied thereto, it acts as a heat pump, with the heat being conveyed from the one large lateral surface to the other large lateral surface. This results in one lateral surface cooling down while the other lateral surface heats up. Such Peltier elements are generally known and are commonly used for cooling purposes.

A number of such Peltier elements are arranged on each side of said block 8, in such a manner that they adjoin the central block 8 with the side which is cooling down. A plate 10 with cooling ribs is arranged against the side of the Peltier elements which heats up in order to dissipate the heat. The central block 8 is thus enclosed by the Peltier elements which are connected in parallel and are fed by means of a direct current source 11. The block 8 is thus cooled, the heat being dissipated by means of the plates 10 comprising cooling ribs. If desired, a fan 12 may also be provided in the housing 1 in order to assist the heat dissipation via the cooling ribs.

Fig. 3 shows a side view of the cooling unit in which the plate 10 comprising cooling ribs has been omitted. In this exemplary embodiment, nine Peltier elements are arranged on each large lateral surface of the block 8.

Such a cooling unit is very reliable and low-maintenance, since it does not contain any moving parts. The unit is furthermore able to cool down the air to below zero degrees Celsius. This cooled air is supplied via the welding torch, the welding torch being provided with means to increase the transfer of heat from the welding torch to the air.

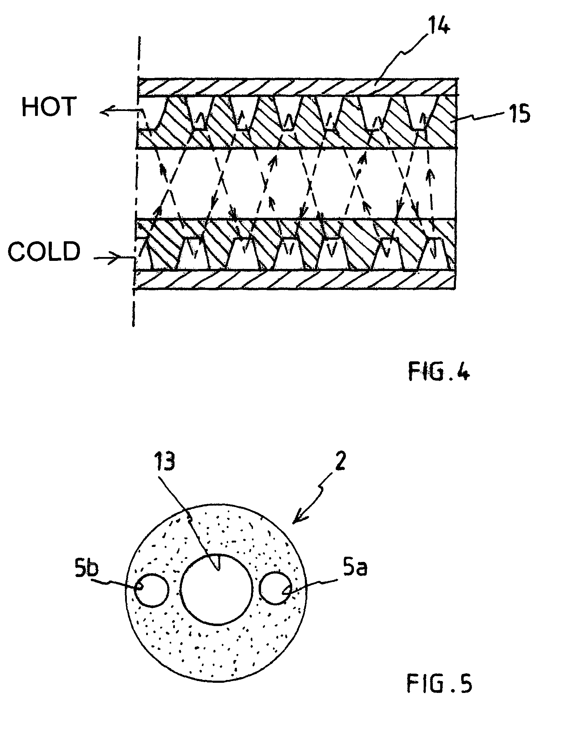

Fig. 4 diagrammatically shows a part of a cooling jacket of the welding torch 3 in cross section. This jacket comprises a protective tube 14 inside of which a tube 15 is arranged which is provided on the outside with a double trapezium-shaped screw thread. Together with the protective tube, this screw thread forms two parallel helical ducts which are in communication with one another at that end of the jacket which is situated closest to the welding mouth of the torch, i.e. the righthand side end in the drawing, so that one continuous duct is formed comprising an outgoing duct part and a returning duct part.

As a result thereof, the cold air flows through the jacket via the outgoing duct part and returns through the jacket again via the returning duct part while absorbing the heat from the welding torch. In the drawing, the path of the air in the cooling jacket is indicated by dashed lines.

The heated air leaves the device via the throttle member 7 in order to keep the pressure of the cooling air in the pressure line 5, 5a, 5b at a desired value.

Fig. 5 shows a cross section of the supply line 2 which is in the form of a coaxial cable having a central passage 13 for supplying the welding wire and the protective gas, while the pressure line 5a for supplying the cooling air and the line 5b for discharging the cooling air which has heated up can be seen in the wall.

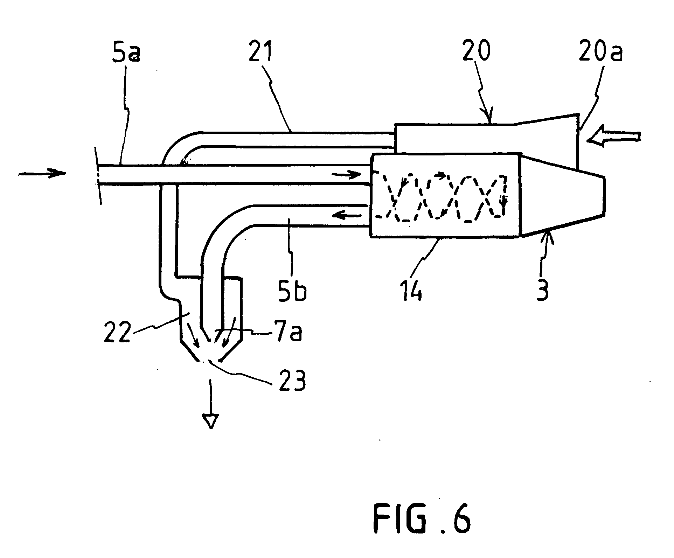

Figure 6 shows a further development of the invention, in which the cooling air flowing out of the line 5b is effectively used for discharging welding fumes, which originate near the mouth of the welding torch 3. For this reason a hood 20 has been arranged on said welding torch, said hood having an inlet opening 20a near the mouth of the welding torch and is connected at the other end to a discharge line 21. Said discharge line ends at some distance from the welding torch in a chamber 22 having an outlet opening 23. The line 5b for discharging the cooling air, which has been warmed up, ends also in the chamber 22. The discharge means 7 of the line 5b in this case exist of a nozzle 7a, so that the cooling air, being warmed up, is flowing out said nozzle with a high velocity. Due to the fact that the nozzle is placed within the chamber 22 at some distance from the outlet opening 23 the cooling air is flowing also out of the outlet opening 23 and the air in the chamber 22 is by induction drawn out of the outlet opening 23 too, creating a vacuum in the chamber 22. In this way the welding fumes are drawn into the inlet opening 20a of the hood 20 and drawn through the discharge line 21, the chamber 22 and finally out of the outlet opening 23.

The hood 20 can be arranged on the welding torch in a removable and/or displaceable way, in order not to obstruct the welding process in some cases.

It will be clear that the invention is not limited to the embodiments which has been illustrated and described here, but that many variants and modifications are obvious to those skilled in the art without departing from the scope of the attached claims.

## Claims

1. Welding device consisting of a housing (1) to which a welding torch (3) is connected via a supply line (2), which housing comprises cooling means (4, 5, 6) which pass a cooling medium to the welding torch via the supply line, **characterized in that** the cooling means are formed by a compressor (4) which draws in outside air and is connected to a pressure line (5, 5a, 5b) which passes this air via the supply line (2) via a cooling unit (6) to the welding torch (3) in order to cool the latter, and returns the air from the welding torch through the line 5b via the supply line to a discharge means (7) which is arranged outside the supply line at some distance from the welding torch, the welding torch being provided with means (16) to assist the heat transfer from the welding torch to the cooling air.

2. Welding device according to Claim 1, **characterized in that** the cooling unit comprises a metal block (8) through which the pressure line (5) runs, which block is in the form of a rectangular flat panel, the two large sides of which being covered by Peltier elements in such a manner that those sides of the Peltier elements which cool down adjoin said block and the other sides of the Peltier elements are covered by plates (10) comprising cooling ribs.

3. Welding device according to Claim 2, **characterized in that** the Peltier elements are connected in parallel and are connected to a direct current source (11).

4. Welding device according to one or more of the preceding claims, **characterized in that** the means to assist the heat transfer from the welding torch to the cooling air consist of a cooling jacket which comprises a double helical duct, the two ducts being in communication with one another close to the welding end of the torch and forming an outgoing and a returning duct part.

5. Welding device according to one or more of the preceding claims 1 - 4, **characterized in that** the discharge means is a throttle means (7).

6. Welding device according to one or more of the preceding claims 1-4, **characterized in that** the welding torch (3) near the welding mouth carries a hood (20) having an inlet opening which is directed to the welding mouth, said hood being connected to a discharge line (21), which ends in a chamber (22) having an outlet opening (23), the discharge means of the discharge line 5b for the cooling air exists of a nozzle (7a), which is situated within the said chamber (22) near the outlet opening (23), in such way that the cooling air, which is leaving the nozzle with high velocity, flows out of the outlet opening (23) and draws a vacuum in the chamber (22) by induction, so that the welding fumes are drawn into the hood (20) and discharged via the line (21), the chamber (22) and the outlet opening (23).

7. Welding device according to Claim 6, **characterized in that** the hood (20) removable and/or displaceable is arranged on the welding torch.
